Europäisches Patentamt

European Patent Office

Office européen des brevets

(19)

(11) Publication number: **0 060 211**
**B1**

# EUROPEAN PATENT SPECIFICATION

(45) Date of publication of patent specification: **28.05.86**

(51) Int. Cl.⁴: **B 65 G 47/26**

(21) Application number: **82630018.8**

(22) Date of filing: **04.03.82**

(54) Powered transmission assembly for an accumulating conveyor.

(30) Priority: **10.03.81 US 242493**

(43) Date of publication of application:
**15.09.82 Bulletin 82/37**

(45) Publication of the grant of the patent:
**28.05.86 Bulletin 86/22**

(84) Designated Contracting States:
**BE CH DE FR GB IT LI NL SE**

(56) References cited:
**DE-A-2 840 044**
**US-A-3 718 248**
**US-A-3 770 102**
**US-A-4 108 303**
**US-A-4 204 593**
**US-A-4 238 029**

(73) Proprietor: **REXNORD INC.**
**P.O. Box 2022**
**Milwaukee, Wisconsin 53201 (US)**

(72) Inventor: **Swain, Ronald R.**
**108 Venetian Way**
**Danville Kentucky 40422 (US)**

(74) Representative: **Weydert, Robert et al**
**Office Dennemeyer S.à.r.l. 21-25 Allée Scheffer**
**P.O. Box 41**
**L-2010 Luxembourg (LU)**

Courier Press, Leamington Spa, England.

## Description

This invention relates to an accumulating roller conveyor comprising a frame, a plurality of rollers supported by said frame and defining a load bearing surface, a plurality of mount members, each rotatably supporting a drive unit comprising a roller drive wheel and a drive element in engagement with an endless drive member, and control means for moving each of said mount members between first and second positions in which the drive wheels respectively are in disengagement with the rollers and drivingly engage the rollers, each mount member having a first support element thereof attached to said frame adjacent said endless drive member, and a second support element thereof located substantially beneath said drive wheel, said control means being arranged between said second support element and said frame and said mount member being biased against said control means. A conveyor of this type is known from US—A—4,238,029.

A special version of powered roller conveyors termed accumulating conveyors have wide applications in the material handling industry. For example, accumulating conveyors are employed in circumstances where it is necessary to convey fragile merchandise and is desirable to avoid the buildup of line pressure when for various reasons further movement of the merchandise is impeded. The collective torque of the continuously rotating rollers could result in damage. Accumulating conveyors provide for a reduction in or a cessation of line pressure in selected regions of the conveyor in response to the impediment.

In addition to the device described in US—A—4,238,029 referred to above various other mechanical devices have been used to convert powered roller conveyors or zones thereof into accumulating conveyors, examples of which may be found in US—A—3,770,102 and 3,718,248. All of the example devices in the aforementioned patents employ some means of interrupting the drive mechanism from the rollers. US—A—3,770,102 describes an inflatable tube which raises and lowers support rollers which in turn raise and lower a powered endless belt against the conveyor rollers. Pneumatic devices of this nature in combination with movable rollers are well recognized in the art of which this patent is but an example.

US—A—3,718,248 sets forth still another mechanical device in which a pivotable wheel connected to a sprocket is pivotable into and out of contact with the roller conveyors. The major benefit of this particular mechanical device is particularly manifested in the modular nature of the drive unit, i.e. drive wheel, sprocket, and connection shaft. Ease of assembly and removal are the result. A detriment, however, is the need to provide a variety of moving parts, e.g. rotating sleeves and collars, to accomplish the rotation. Such parts are susceptible to wear and, as an obvious drawback, add to the cost of manufacture.

Another example of a pivotable device is disclosed in US—A—4.108.303. This device also has the benefits associated with a modular unit, however, the weight of the drive chain is raised and lowered together with the pivotable wheel that engages the conveying rollers. This tends to result in excessive wear of the chain guides and other components of the modular unit.

The device of US—A—4.238.029 referred to above comprises a L-shaped bracket having at one arm thereof a hinge tab pivotably received in an aperture of the conveyor frame. The L-shaped bracket has a depending bracket portion biased by a helical spring into engagement with a control means attached to the conveyor frame. The tab-aperture pivotable mounting is subjected to wear in use and a separate biasing spring is required.

A further drawback associated with the above described known pivotable wheel devices employed in accumulating conveyors is the relatively high degree of accuracy that must be maintained in aligning the wheel so that two adjacent conveying rollers are driven by the wheel. Misalignment or uneven wear may cause the wheel to engage only one conveying roller.

The object of the present invention is to preserve the modular concept of a movable drive unit which can couple and uncouple the power source from the rollers which requires a lesser degree of alignment accuracy, is less susceptible to wear and simpler in mechanical structure, while avoiding the necessity for a pivoting action and commitant elements needed to provide such action are unnecessary.

To achieve this the accumulating roller conveyor is characterized in that the first support element has a thinned flexible portion therein and is fixedly secured to said frame, that said thinned flexible portion is pretensioned to bias the mount member against the control means and is flexible in a first direction to move said drive wheel toward said rollers and in a second direction to move said drive wheel longitudinally of the conveyor.

The conveyor will be more readily apparent by a reading of the following detailed description and the appended drawings in which:

Figure 1 is a schematic of a typical conveyor apparatus in which the present invention is employed;

Figure 2 is an end view of a conveyor showing a roller and the drive unit of the present invention;

Figure 3 is a sectional view taken along lines 3—3 of Figure 2;

Figure 4 is a sectional view taken along lines 4—4 of Figure 2;

Figure 5 is a sectional view taken along lines 5—5 of Figure 2;

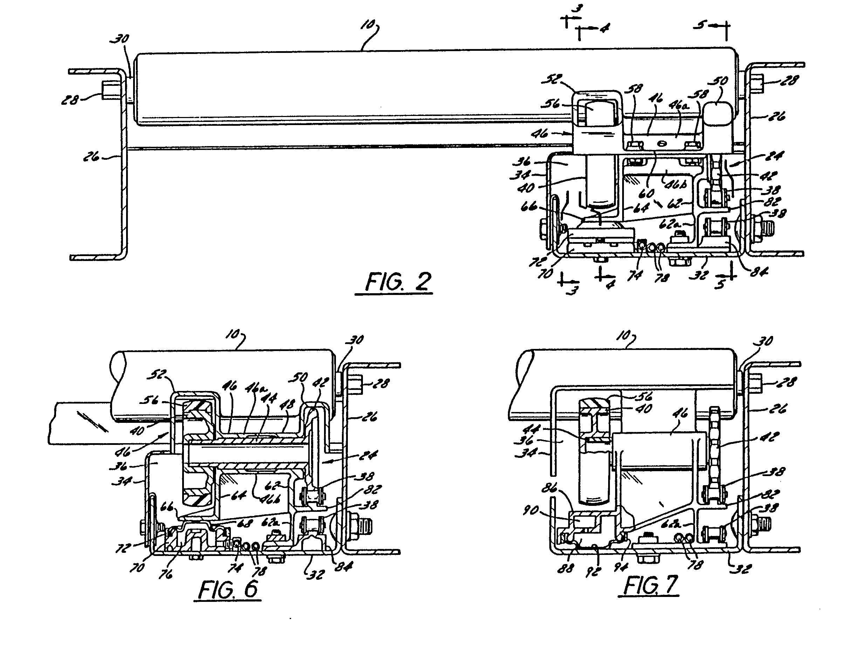

Figure 6 is a sectional view taken along lines 6—6 of Figure 3; and

Figure 7 is a view similar to Figure 6 except of a different construction.

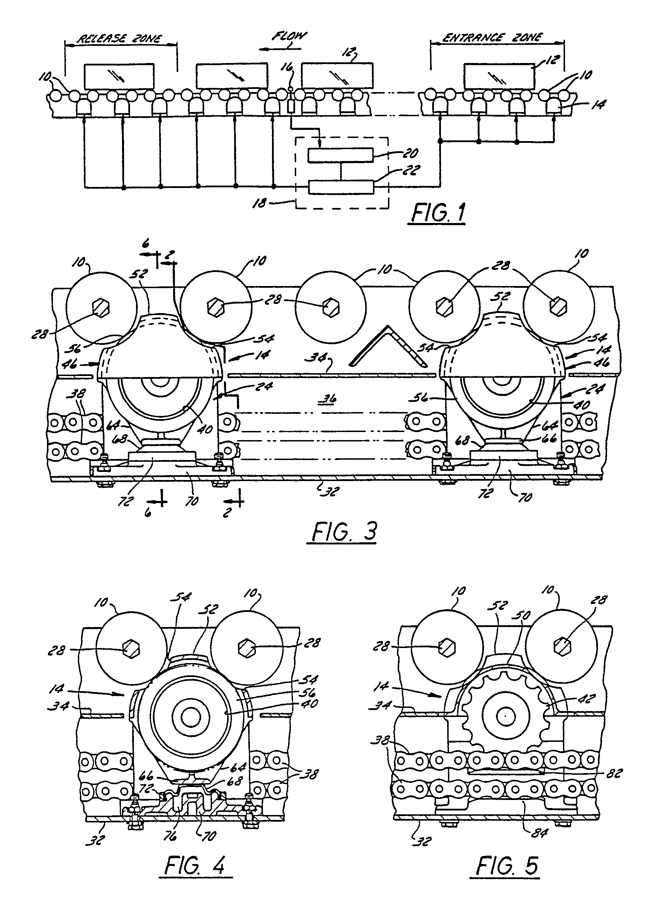

The schematic of Figure 1 illustrates in abbreviated form the environment in which the present invention may operate. The conveying apparatus depicted therein comprises a plurality of rollers 10 defining a surface over which a series of articles 12 can be moved. Driving each pair of rollers 10 are driving members 14. Positioned at predetermined intervals between rollers 10 are sensing rollers 16 or other means which through depression thereof or detection by an article 12 being propelled by the rollers can disengage or uncouple via the control system 18 the driving members 14 from other rollers 10 at various predetermined locations or zones in the conveying apparatus. For example, when it is desired that the conveyor apparatus be operated in an accumulating mode, zones which are upstream, i.e. located closer to the entrance zone may be deactivated when the presence of an article is sensed by one or more downstream zones. Thus, when sensing roller 16 is depressed, it activates pressure control 20 which in turn causes pressure source 22 to alter its pressure to drive member 14, thereby decoupling member 14 from rollers 10 and deactivating that part of the conveyor.

Figure 2 illustrates an end view of the conveyor apparatus of the patent invention. The conveyor itself is comprised of the usual elements, namely a pair of parallel rails 26 which form parts of the overall conveyor frame structure. Roller 10 is supported for rotary movement between rails 26 by stationary axle 28 held motionless by virtue of the hexagonal cross-section thereof and complementary axle support openings in rails 26.

Rollers 10 may be of any conventional structure commonly used in the material handling industry. For example, the rollers may be formed of sheet steel material into a cylindrical shape and fitted, for example, with hub inserts 30 having inner and outer races separated by spherical bearings. The inner race of hubs 30 are held stationary due to complementary internal fit with axles 28 while the outer race and rollers 10 are free to turn.

Extending beneath rollers 10 and secured by a longitudinal edge to one of the rails 26 is support bracket 32 which runs the longitudinal length of the conveyor. Attached to the other longitudinal edge of support bracket 32 is an enclosure cover 34 which together with support bracket 32 forms an enclosure 36 running the length of the conveyor as perhaps best seen in Figure 3. The primary purpose of enclosure 36 is to prevent unintentional contact with the various drive elements employed to move the rollers and to prevent entrance of foreign materials which could be detrimental to proper operation of the conveyor.

Positioned within enclosure 36 is drive unit 24 which, as stated above, serves to transmit power from an endless member such as roller chain 38 to rollers 10. Unit 24 comprises a drive wheel 40 connected to a sprocket 42 by a shaft 44. The mounting for wheel 40, shaft 44, and sprocket 42 is split housing 46 formed into upper section 46a and lower section 46b which completely encloses shaft 44 with cylindrical mid-portion 48. Additionally, housing 46 encloses the upper half of sprocket 42 with sprocket cover 50 and substantially the upper half of wheel 40 with wheel cover 52.

As best seen in Figure 3, wheel 40 is positioned between adjacent rollers 10 so as to simultaneously contact both when in position through openings 54 in wheel cover 52. Additionally, wheel 40 may be provided a rim 56 which will facilitate frictional contact with rollers 10.

Preferably wheel 40, shaft 44, and sprocket 42 may be one unitary piece, as for example, an injection molded thermoplastic piece. Alternatively, each element could be formed separate out of various plastics and/or metallic materials with wheel 40 and sprocket 42 being keyed to shaft 44.

The halves of housing 46 may be bolted together by bolts 58 along complementary flanges 60 which extend horizontally outward along both sides of split central portion 48. This can best be viewed in Figure 2. The split housing 46 can provide access to drive unit 24 if any or all of the elements 40, 42, 44 need to be replaced and to facillitate assembly. Housing 46 provides additional protection against egress of foreign substances which could interfere with the proper function of the apparatus.

Support for drive unit 24 is provided by a pair of vertical legs 62, 64 integral with and extending downward from lower housing section 46b. Leg 62 is secured to support bracket 32 by the flex member 62a while leg 64 terminates in a horizontal flange 66 which itself is positioned substantially beneath wheel 40 and is biased against a diaphragm 68. As perhaps best seen in Figure 4, leg 62 takes the form of a wedge which converges to its junction with flange 66.

As should now be readily evident, flange 66 is capable of movement with diaphragm 68. It is important that flange 66 be biased in the direction of diaphragm 68. While there are various ways that this can be accomplished, the simplest and preferred mode is to pretension or load lower housing 46b to provide a natural tendency for flange 66 to resist any upward movement of diaphragm 68. To facilitate the flexing of housing 46, leg 62 is provided with a thinned cross-section to provide flexing in the region 62a near where it is fastened to support bracket 32 as is readily evident from Figure 2.

Diaphragm 68 is secured to diaphragm mount 70 by retaining ring 72. Mount 70 is fastened in an air tight relationship to support bracket 32. A passageway 74 communicates with chamber 76 within mount 70. A plurality of air hose fittings 78 are attached to the external mouth of passageway 74 to be appropriately attached to hoses leading to a remote source of air pressure 22 seen in Figure 1.

As said above, the bias of housing 46 in a manner such as to urge flange 66 to follow diaphragm 68 provides an important additional function. Prior art decoupling mechanisms generally employ gravity to accomplish movement of drive wheels away from the rollers.

Obviously, perhaps because of foreign materials, there are times when gravity is ineffective due to sticking or jamming of the pivotable support of the drive wheels. This may result in continuous contact of the drive wheel with its rollers and continuous rotation of the rollers. The present invention does not have this problem.

Diaphragm 68 is preferably of the rolling type of diaphragm and may be composed of any suitable materials such as polyurethane.

Positioned beneath sprocket 42 is the endless member 38, e.g. a strand of roller chain, which is held into contact with sprocket 42 by a guide 82 which extends from leg 62. The return strand of chain 38 guides along the surface of guide 84 secured to support bracket 32. Chain 38 may be driven by a suitable mechanism, the drive of which is not shown and forms no part of the invention herein.

Figure 7 illustrates another construction of the present invention in which housing 46 is provided with an extension 86 comprising a chamber 88 and an air inlet/exit 90. Diaphragm 92 is held in an airtight relationship to chamber 88 by retaining ring 94. Diaphragm 92, when inflated, presses against support bracket 32.

In operation when the conveyor or a particular zone of a conveyor is in a non-accumulated or live mode, drive wheel 40 is held into contact with adjacent pairs of rollers 10. This is accomplished because diaphragm 68 is inflated and therefore elevates flange 60. Thus the entire housing flexes along its length, particularly in the thinned region 62a. Since flange 60 is capable of flexing horizontally to some extent as well as vertically, drive wheel 40 can be considered self-centering between two rollers 10. Accuracy of alignment of the driving housing 46 is therefore less critical than it is in similar known devices. Sprocket 42 being continuously driven by chain 38 causes rollers 10 to rotate. As chamber 76 is evacuated in response to a signal received, for example, from the sensing rollers of several upstream zones (indicating the presence of several articles) diaphragm 68 contracts and, because housing 46 is pretensioned, flange 66 follows diaphragm 68. Wheel 40 is then lowered and spaced away from rollers 10, permitting them to be freely rotating. In this manner, any articles on rollers 10, of the particular zone where wheels 40 are lowered, will cease moving and accumulate.

From a reading of the description and appended drawings, certain other modifications and alterations to the present invention will be evident to those skilled in the art without departing from the metes and bounds of the invention as defined by the following claims.

## Claims

1. Accumulating roller conveyor comprising a frame (26, 32), a plurality of rollers (10) supported by said frame (26, 32) and defining a load bearing surface, a plurality of mount members (46), each rotatably supporting a drive unit (24) comprising a roller drive wheel (40) and a drive element (42) in engagement with an endless drive member (38), and control means for moving each of said mount members (46) between first and second positions in which the drive wheels (40) respectively are in disengagement with the rollers (10) and drivingly engage the rollers (10), each mount member (46) having a first support element (62) thereof attached to said frame (26, 32) adjacent said endless drive member (38), and a second support element (64, 66; 86) thereof located substantially beneath said drive wheel (40), said control means being arranged between said second support element (64, 66; 86) and said frame (26, 32) and said mount member (46) being biased against said control means, characterized in that said first support element (62) has a thinned flexible portion (62a) therein and is fixedly secured to said frame (26, 32), that said thinned flexible portion (62a) is pretensioned to bias the mount member (46) against the control means and is flexible in a first direction to move said drive wheel (40) toward said rollers (10) and in a second direction to move said drive wheel (40) longitudinally of the conveyor.

2. Conveyor according to claim 1, characterized in that said control means (68) is secured to said frame (26, 32) and operates against said second support element (64, 66).

3. Conveyor according to claim 1, characterized in that said control means is secured to said second support element (86) and operates against said frame (26, 32).

4. Conveyor according to any one of claims 1 to 3, characterized in that said control means comprises an inflatable diaphragm (68; 92) for flexing against the bias force of the pretensioned thinned flexible portion (62a) of said first support element (62).

5. Conveyor according to any one of claims 1 to 4, characterized in that the drive wheel (40) and drive element (42) of said drive unit (24) are interconnected by a shaft (44) extending therebetween, that the mount member (46) comprises a housing having a central portion (48) rotatably supporting said shaft (44) between the drive wheel (40) and the drive element (42), said first support element (62) comprising a fixed leg extending downwardly from said central housing portion (48) at an end thereof adjacent the drive element (42) and the second support element (64, 66; 86) comprising a movable leg extending downwardly from said central housing portion (48) at the other end thereof adjacent the drive wheel (40) towards the control means (68).

6. Conveyor according to claim 5, characterized in that the housing (46) is split and comprises a lower section (46b) and an upper section (46a), said upper section (46a) having a first cover portion (50) enclosing the upper half of drive element (42) and a second cover portion (52) partly enclosing the upper half of the drive wheel (40).

7. Conveyor according to any one of claims 1 to 6, characterized in that a guide (82) for the endless drive member (38) extends from the first support element (62) to hold the endless drive member (38) in engagement with the drive element (42).

8. Conveyor according to claim 5, characterized in that the drive wheel (40), the drive element (42) and shaft (44) are formed as a thermoplastic, injection molded unitary piece.

## Patentansprüche

1. Sammelrollenförderer mit einem Rahmen (26, 32), mehreren Rollen (10), die an dem Rahmen (26, 32) angebracht sind und eine tragende Oberfläche bilden, mehreren Befestigungsteilen (46), von denen jedes eine Antriebseinheit (24) drehbar trägt, welche ein Rollenantriebsrad (40) und ein Antriebselement (42) in Eingriff mit einem endlosen Antriebsteil (38) aufweist, und einer Steuereinrichtung zum Bewegen jedes Befestigungsteils (46) zwischen einer ersten und einer zweiten Position, in denen die Antriebsräder (40) von den Rollen (10) getrennt bzw. mit den Rollen (10) in Antriebsberührung sind, wobei jedes Befestigungsteil (46) ein erstes Tragelement (62) hat, das an dem Rahmen (26, 32) neben dem endlosen Antriebsteil (38) befestigt ist, und ein zweites Tragelement (64, 66; 86), das im wesentlichen unterhalb des Antriebsrades (40) angeordnet ist, wobei die Steuereinrichtung zwischen dem zweiten Tragelement (64, 66; 86) und dem Rahmen (26, 32) angeordnet ist und wobei das Befestigungsteil (46) gegen die Steuereinrichtung gedrückt ist, dadurch gekennzeichnet, daß das erste Tragelement (62) einen dünner gemachten flexiblen Teil (62a) hat und an dem Rahmen (26, 32) fest angebracht ist, daß der dünner gemachte flexible Teil (62a) vorgespannt ist, um das Befestigungteil (46) gegen die Steuereinrichtung zu drücken, und in einer ersten Richtung flexibel ist, um das Antriebsrad (40) zu den Rollen (10) zu bewegen, und in einer zweiten Richtung, um das Antriebsrad (40) in Längsrichtung des Förderers zu bewegen.

2. Förderer nach Anspruch 1, dadurch gekennzeichnet, daß die Steuereinrichtung (68) an dem Rahmen (26, 32) befestigt ist und gegen das zweite Tragelement (64, 66) wirkt,

3. Förderer nach Anspruch 1, dadurch gekennzeichnet, daß die Steuereinrichtung an dem zweiten Tragelement (86) befestigt ist und gegen den Rahmen (26, 32) wirkt.

4. Förderer nach einem Ansprüche 1 bis 3, dadurch gekennzeichnet, daß die Steuereinrichtung eine aufblasbare Membran (68; 92) aufweist, die gegen die Druckkräfte des vorgespannten, dünner gemachten flexiblen Teiles (62a) des ersten Tragelements (62) biegbar ist.

5. Förderer nach einem der Ansprüche 1 bis 4, dadurch gekennzeichnet, daß das Antriebsrad (40) und das Antriebselement (42) der Antriebseinheit (24) durch eine sich zwischen ihnen erstreckende Welle (44) miteinander verbunden sind, daß das Befestigung teil (46) ein Gehäuse aufweist, das einen zentralen Teil (48) hat, der die Welle (44) zwischen dem Antriebsrad (40) und dem Antriebselement (42) drehbar trägt, daß das erste Tragelement (62) einen festen Schenkel aufweist, der sich von dem zentralen Gehäuseteil (48) an einem Ende desselben nahe dem Antriebselement (42) nach unten erstreckt, und daß das zweite Tragelement (64, 66; 86) einen beweglichen Schenkel aufweist, der sich von dem zentralen Gehäuseteil (48) an dem anderen Ende desselben nahe dem Antriebsrad (40) zu der Steuereinrichtung (68) erstreckt.

6. Förderer nach Anspruch 5, dadurch gekennzeichnet, daß das Gehäuse (46) geteilt ist und einen unteren Abschnitt (46b) und einen oberen Abschnitt (46a) aufweist, wobei der obere Abschnitt (46a) einen ersten Deckelteil (50) hat, der die obere Hälfte des Antriebselements (42) umschließt, und einen zweiten Deckelteil (52), der die obere Hälfte des Antriebsrades (40) teilweise umschließt.

7. Förderer nach einem der Ansprüche 1 bis 6, dadurch gekennzeichnet, daß sich eine Führung (82) für das endlose Antriebsteil (38) von dem ersten Tragelement (62) aus erstreckt, um das endlose Antriebselement (38) mit dem Antriebselement (42) in Eingriff zu halten.

8. Förderer nach Anspruch 5, dadurch gekennzeichnet, daß das Antriebsrad (40), das Antriebselement (42) und die Welle (44) als ein thermoplastisches, einstückiges Spritzteil ausgebildet sind.

## Revendications

1. Convoyeur à accumulation à roleaux comprenant un châssis (26, 32), une pluralité de rouleaux (10) supportés par ce châssis (26, 32) et définissant une surface supportant une charge, une pluralité d'organes de montage (46) supportant chacun à rotation une unité d'entraînement (24) comprenant une roue (40) d'entraînement des rouleaux et un élément d'entraînement (42) en contact avec un organe d'entraînement sans fin (38), et des moyens de commande pour déplacer chacun des organes de montage (46) entre des première et seconde positions dans lesquelles les roues d'entraînement (40) sont respectivement écartées des rouleaux (10) et en contact d'entrai-3nement avec ces rouleaux (10), chaque organe de montage (46) ayant un premier élément support (62) fixé au châssis (26, 32) dans une position adjacente à l'organe d'entraînement sans fin (38), et un second élément support (64, 66; 86) placé sensiblement en dessous de la roue d'entraînement (40), ces moyens de commande étant disposés entre le second élément support (64, 66; 86) et le châssis (26, 32) et l'organe de montage (46) étant sollicité contre les moyens de commande, caractérisé en ce que le premier élément support (62) a une partie flexible amincie (62a) et il est fixé fermement au châssis (26, 32), cette partie flexible amincie (62a) est précontrainte de manière à solliciter l'organe de montage (46) contre les moyens de commande et elle est flexible dans une première direction afin de de-1placer la roue d'entraînement (40) en direction des rouleaux (10), et également dans une seconde direction pour déplacer la roue d'entraînement (40) longitudinalement par rapport au convoyeur.

2. Convoyeur suivant la revendication 1 caractérisé en ce que les moyens de commande (68) sont fixés au châssis (26, 32) et ils agissent contre le second élément support (64, 66).

3. Convoyeur suivant la revendication 1 caractérisé en ce que les moyens de commande sont fixés au second élément support (86) et ils agissent contre le châssis (26, 32).

4. Convoyeur suivant l'une quelconque des revendications 1 à 3 caractérisé en ce que les moyens de commande comprennent un diaphragme gonflable (68; 92) pour faire fléchir, à l'encontre de la force de sollicitation, la partie flexible amincie précontrainte (62a) du premier élément support (62).

5. Convoyeur suivant l'une quelconque des revendications 1 à 4 caractérisé en ce que la roue d'entraînement (40) et l'élément d'entraînement (42) de l'unité d'entraînement (24) sont reliés entre eux au moyen d'un arbre (44) s'étendant entre eux, l'organe de montage (46) comprend un boîtier ayant une portion centrale (48) supportant à rotation l'arbre (44), entre la roue d'entraînement (40) et l'élément d'entraînement (42), le premier élément support (62) comprenant une aile fixée s'étendant vers le bas à partir de la portion centrale (48) du boîtier, à une extrémité de celui-ci adjacente à l'élément d'entraînement (42), le second élément support (64, 66; 86) comprenant une aile mobile s'étendant vers le bas à partir de la portion centrale (48) du boîtier, à l'autre extrémité de celui-ci qui est adjacente à la roue d'entraînement (40), et ce en direction des moyens de commande (68).

6. Convoyeur suivant la revendication 5 caractérisé en ce que le boîtier (46) est séparé en deux et il comprend une section inférieure (46b) et une section supérieure (46a), la section supérieure (46a) ayant une première portion formant couvercle (50) enfermant la moitié supérieure de l'élément d'entraînement (42) et une seconde portion formant couvercle (52) enfermant partiellement la moitié supérieure de la roue d'entraînement (40).

7. Convoyeur suivant l'une quelconque des revendications 1 à 6 caractérisé en ce que un guide (82) pour l'organe d'entraînement sans fin (38) s'étend à partir du premier élément (62) afin de maintenir l'organe d'entraînement sans fin (38) en contact avec l'élément d'entraînement (42).

8. Convoyeur suivant la revendication 5 caractérisé en ce que la roue d'entraînement (40), l'élément d'entraînement (42) et l'arbre (44) forment une seule pièce en matière thermoplastique moulée par injection.

RELEASE ZONE

FLOW

ENTRANCE ZONE

*FIG. 1*

*FIG. 3*

*FIG. 4*

*FIG. 5*

FIG. 2

FIG. 6

FIG. 7

2